# EUROPÄISCHE PATENTSCHRIFT

(11) **EP 0 798 956 B1**
(45) Veröffentlichungstag und Bekanntmachung des Hinweises auf die Patenterteilung: **03.01.2001**
(21) Anmeldenummer: 95936548.7
(22) Anmeldetag: 25.10.1995
(51) Int. Cl.: A01B 51/02

(54) **VORRICHTUNG ZUR AUFBEREITUNG DER BODENFLÄCHE EINER REITBAHN**
DEVICE FOR PREPARING THE GROUND AREA OF AN ARENA
DISPOSITIF POUR PREPARER LE SOL D'UN MANEGE

(43) Veröffentlichungstag der Anmeldung: 08.10.1997
(73) Patentinhaber: Diehl, Georg, Michael, 65934 Frankfurt am Main (DE)
(72) Erfinder: Diehl, Georg, Michael, 65934 Frankfurt am Main (DE)
(74) Vertreter: KEIL & SCHAAFHAUSEN
(86) Internationale Anmeldenummer: EP9504189
(87) Internationale Veröffentlichungsnummer: WO9715180

(56) Entgegenhaltungen:
- DE-A- 1 582 784
- DE-A- 2 150 519
- DE-A- 3 605 493
- FR-A- 2 443 189
- US-A- 2 957 254
- US-A- 3 186 493

## Beschreibung

Die Erfindung bezieht sich auf eine Vorrichtung zum Aufbereiten der Bodenfläche einer Reibahn in einer Reithalle oder auf einem offenen Reitplatz.

Die Böden von Reitbahnen bestehen in der Regel aus Sand, Torf oder Sägespänen bzw. einem Gemisch dieser Bestandteile. Sie unterliegen vor allem auf Übungsplätzen dauernden Beanspruchungen durch den Hufschlag. Dieses hat zur Folge, daß sich Torf, Sand oder Sägespäne oft an den Längs- bzw. Querbanden, aber auch in den Ecken einer Reitbahn ansammeln und dort zu störenden Unebenheiten führen. Der Reitbetrieb muß dann unterbrochen werden, damit der Boden planiert werden kann. Hierzu wird üblicherweise eine Egge benutzt, die von einem Traktor gezogen wird.

Dieses Verfahren nimmt relativ viel Zeit in Anspruch, vor allem dann, wenn sich große Mengen des Bodens angesammelt haben, die verteilt und eingeebnet werden müssen.

Hinzu kommt, daß die Luft vor allem in Reithallen durch die Abgase des Traktors für relativ lange Zeit verschmutzt wird.

Eine weitere Beeinträchtigung des Bodens ergibt sich durch die Austrocknung mit der Folge, daß der Reitbetrieb durch lästigen Staub gestört wird.

Um die Staubbildung zu vermeiden, wird der Boden angefeuchtet. Im einfachsten Fall geschieht dieses durch Besprühen aus einem Wasserschlauch. In vielen Fällen jedoch wird zum Besprühen des Bodens eine Sprinkler-Anlage über der Reitbahn benutzt. In einer Reithalle wird dadurch ein feucht-tropisches Klima erzeugt, ohne daß das unter dem Hallendach versprühte Wasser auf den Boden gelangt. Dieser ist darüber hinaus oft so trocken, daß er versprühtes Wasser gar nicht aufnimmt.

Dem gegenüber liegt der vorliegenden Erfindung die Aufgabe zugrunde, eine Möglichkeit zu schaffen, mit der die Aufbereitung des Bodens einer Reitbahn intensiver und schneller, vor allem auch ohne wesentliche zeitliche Störung des Reitbetriebes ermöglicht werden kann.

Es wurde gefunden, daß sich diese Aufgabe in einfacher Weise mit einer Vorrichtung gemäß Anspruch 1 lösen läßt.

Durch diese Kombination aus dem Fahrgestell, den in der Höhe verstellbaren Werkzeugen zur Bodenbearbeitung und der Einrichtung zur Befeuchtung des Bodens läßt sich die Bodenfläche der Reitbahn ohne Mühe und ohne Zeitverlust einebnen. Die Einebnung ist um so einfacher, je kürzer die Zeitspannen zwischen aufeinanderfolgenden Bodenbearbeitungen sind.

Von besonderem Vorteil ist, daß der Boden während seiner mechanischen Aufbereitung aus geringer Höhe mit Wasser besprüht wird. Dadurch läßt sich eine intensive Durchfeuchtung des Torfes, der Sägespäne bzw. des Sandes oder einer Mischung dieser Bestandteile erreichen, ohne daß bei der Bodenbearbeitung in nennenswertem Maße Staub entwickelt bzw. in einer Reithalle ein unangenehm feuchtes Klime durch versprühtes Wasser erzeugt wird.

Einzelheiten der Erfindung ergeben sich aus den Unteransprüchen.

Gemäß Anspruch 2 besteht das Fahrgestell aus zwei Fahrwerken mit Rädern und Querverbindern, die die Fahrwerke miteinander verbinden.

Weitere Einzelheiten des Fahrgestells ergeben sich aus den Ansprüchen 3 bis 10.

Jedes Fahrwerk besteht aus einem Rahmen und zwei Rädern, die als reine Laufräder ausgebildet sein können. Für sie können einfache Fahrbahnen, z.B. aus Beton, entlang der Längsseiten der Bodenfläche vorgesehen werden. Im einfachsten Fall können die Laufräder auch über die seitlichen Bereiche der Bodenfläche laufen.

In anderen Ausführungsbeispielen können auch Schienenlaufräder eingesetzt werden, die auf eigens verlegten Schienen laufen und von diesen geführt werden.

Die normale Breite einer Reitbahn beträgt 20 m. Das Fahrgestell, welches die ganze Breite der Fahrbahn überspannt, muß deshalb stabil konstruiert sein, um auch bei der Bodenbearbeitung quer zur Fahrtrichtung des Fahrgestells auftretende Beanspruchungen ohne Beeinträchtigung der Lebensdauer aufnehmen zu können.

Aus diesem Grunde kann wenigstens eine Stützrolle unterhalb der Querverbinder eingesetzt werden, um das Gewicht der Bodenbearbeitungsgeräte, vor allem in derem hochgefahrenen Zustand, aufnehmen zu können.

Die Konfigurationen von mit Vorteil einzusetzenden Querverbinder sind in den Ansprüchen 7 bis 10 gekennzeichnet. Es genügt unter Umständen, wenn jeweils ein Querverbinder vorgesehen wird. Besonders sichere Fahrgestelle mit einer langen Lebensdauer ergeben sich jedoch. wenn jeweils zwei parallel angeordnete Walzprofilträger, Stegblechträger bzw. Fachwerkträger eingesetzt werden. Ein Kastenträger hat neben dem Vorteil guter Stabilität zusätzlich noch den Vorteil, daß die Bodenbearbeitungsgeräte und die Einrichtung zum Befeuchten der Bodenfläche geschützt im Kastenträger angeordnet werden können.

In einem ersten Ausführungsbeispiel gemäß Anspruch 11 erfolgt der Antrieb des Fahrgestells durch wenigstens eine Seilzuganordnung neben einer Längsseite der Bodenfläche. Das Fahrgestell ist durch einen Mitnehmer an den Antriebstrum der Seilzuganordnung angeschlossen. Gemäß Anspruch 17 ist die Seilzuganordnung mit je einem Antriebsrad und einem Umlaufrad an jeweils einem Ende der Längsseite der Bodenfläche verbunden.

Die Seilzuganordnung kann unterhalb einer Längsbande, aber auch innerhalb eines Kanals unterhalb der Bodenfläche angeordnet werden. Im letzteren Fall sind die Kanalbereiche z.B. an Toren mit einer Abdeckung versehen. Es empfiehlt sich, das Fahrgestell auf beiden Seiten an Seilzuganordnungen anzuschließen mit der Folge, daß ein Gleichlauf beider Fahrwerke gesichert ist, und daß einfache Laufräder zum Einsatz kommen können.

Wenn eine oder zwei gegenüberliegende Seilzuganordnungen nicht eingesetzt werden können, beispielsweise wegen der baulichen Gestaltung einer Reithalle, erhält das Fahrgestell einen Eigenantrieb, der gemäß Anspruch 16 wenigstens einen Elektro-Antriebsmotor einschließt, der an ein Fahrwerk angeflanscht ist und über Zahnräder mit einem Rad des Fahrwerks in Wirkverbindung steht. Erfindungsgemäß ist es möglich, jedes Fahrwerk des Fahrgestells an einen Elektro-Antriebsmotor anzuschließen. Dadurch kann ein Gleichlauf beider Fahrwerke sichergestellt werden.

Wenn jedoch jeweils nur ein Fahrwerk mit einem Bewegungsantrieb kombiniert ist, können gemäß Anspruch 18 beide Fahrwerke über eine Gleichlaufeinrichtung miteinander in Wirkverbindung stehen.

Nach Anspruch 19 kann der Eigenantrieb auch einen Zentralantriebsmotor sowie eine Kupplung, eine Welle und Zahnräder in Verbindung mit einem Rad wenigstens eines Fahrwerkes einschließen. Der Zentral-antriebsmotor kann etwa in der Mitte des Fahrgestells angeordnet sein und eine Welle antreiben, die entweder nur mit einem Fahrwerk oder auch mit beiden Fahrwerken in Antriebsverbindung steht. Im letzteren Fall stellt sich automatisch ein Gleichlauf beider Fahrwerke ein.

Eigenantriebe für das Fahrgestell haben den Vorteil, daß die Vorrichtung komplett geliefert werden kann, ohne daß in der Reitbahn zusätzliche Arbeiten, beispielsweise für Seilzuganordnungen, erforderlich sind.

Es ist von Vorteil, wenn insbesondere bei einseitigem Antrieb des Fahrgestells, als Fahrbahnen Schienen und als Räder Schienenlaufräder eingesetzt werden, wodurch auch eine Führung des Fahrgestells bewirkt wird.

Die Werkzeuge für die Bodenbearbeitung sind in Übereinstimmung mit den Ansprüchen 20 bis 31 ausgebildet. Es hat sich herausgestellt, daß mit Zinken gemäß Anspruch 20 eine ebenso einfache wie optimale Bearbeitung sowie Planierung des Bodens erreicht werden kann.

Gemäß Anspruch 21 sitzen die Zinken an um Kettenräder geführten Ketten, die quer zur Fahrtrichtung des Fahrgestells umlaufen. Wenn die Wellen für die Kettenräder parallel zu den Längsseiten der Bodenfläche verlaufen, bearbeiten jeweils nur die Zinken an einem Trum der Kette den Boden. Der andere zurücklaufende Trum der endlosen Kette wird oberhalb des Arbeitstrums zurückgeführt.

Bei Anordnung der Wellen gemäß Anspruch 28 bearbeiten die Zinken beider Trums einer endlosen Kette den Boden, wobei die Zinken des einen Trums in einer Richtung die Zinken des anderen Trums in gegenläufiger Richtung durch den Boden bewegt werden. Hierdurch wird eine gute Durcharbeitung und Planierung des Bodens erreicht.

In bevorzugten Ausführungsbeispielen werden vier Ketten im Fahrgestell eingesetzt, die mit jeweils einem Antriebsmotor zu einer Einheit innerhalb eines Blockes zusammengefaßt sind. Diese Blöcke können auch unabhängig voneinander in ihren Höhen über der Bodenfläche verstellt werden. In der unteren Stellung greifen die Zinken in den Boden ein, wohingegen in der oberen Stellung die Zinken keinen Kontakt mit der Bodenfläche haben.

Gemäß Anspruch 26 können die Zinken auch an den Mantelflächen von Trommeln sitzen, die an quer zur Fahrtrichtung verlaufenden Wellen befestigt sind, die drehbar zusammen mit einem Antriebsmotor zu einem Block zusammengefaßt sind. In bevorzugten Ausführungsbeispielen sind im Fahrgestell vier Trommelblöcke gelagert, die höhenverstellbar sind (Ansprüche 27 bis 30).

Die Ketten bzw. Trommeln werden hochgestellt, wenn das Fahrgestell im Leerlauf über die Bodenfläche der Reitbahn verfahren werden soll.

Die Zinken sind federnd an den Ketten bzw. den Mänteln der Trommeln befestigt.

Obzwar der Antrieb für die Ketten und die Trommeln auch vom Bewegungsantrieb des Fahrgestells über Zahn- bzw. Kegelräder abgenommen werden könnte, wird bevorzugt für den Antrieb jeder Kette bzw. jeder Trommel ein Elektromotor eingesetzt.

Zur Befeuchtung des Bodens wird eine Einrichtung gemäß Anspruch 32 mit einem Sprührohr eingesetzt.

Weitere Einzelheiten der Erfindung ergeben sich aus den Ansprüchen 33 und 34.

Ausführungsbeispiele der Erfindung werden nachfolgend anhand der Zeichnung erläutert. Es zeigt:
- Fig. 1: eine Draufsicht auf ein erstes Ausführungsbeispiel der Erfindung,
- Fig. 2: einen Schnitt entlang der Linie II/II in Fig. 1,
- Fig. 3: schematisch einen Teilschnitt durch ein Fahrwerk mit Laufrädern und mit einem Querträger und einem Seilzug unterhalb der Bodenfläche,
- Fig. 4: schematisch einen Teilquerschnitt durch ein Fahrwerk mit Schienenlaufrädern und einer Seilzuganordnung unterhalb einer Bande,
- Fig. 5: ein mit einem Zahnrad gekoppeltes Schienenlaufrad in einem Fahrwerk,
- Fig. 6: den Anschluß eines Eigenantriebes an ein Fahrwerk,
- Fig. 7: eine schematische Darstellung eines Eigenantriebes für das Fahrgestell,
- Fig. 8: verschiedene Querschnittsformen von Querverbindern,
- Fig. 9: eine schematische Darstellung der Anordnung von Trommeln unterhalb des Fahrgestells,
- Fig. 9a: einen Querschnitt durch Fig. 9 entlang der Linie IXa/IXa,
- Fig. 10: eine schematische Darstellung eines Fahrgestells mit Ketten sowie
- Fig. 10a: einen Querschnitt entlang der Linie Xa/Xa in Fig. 10.

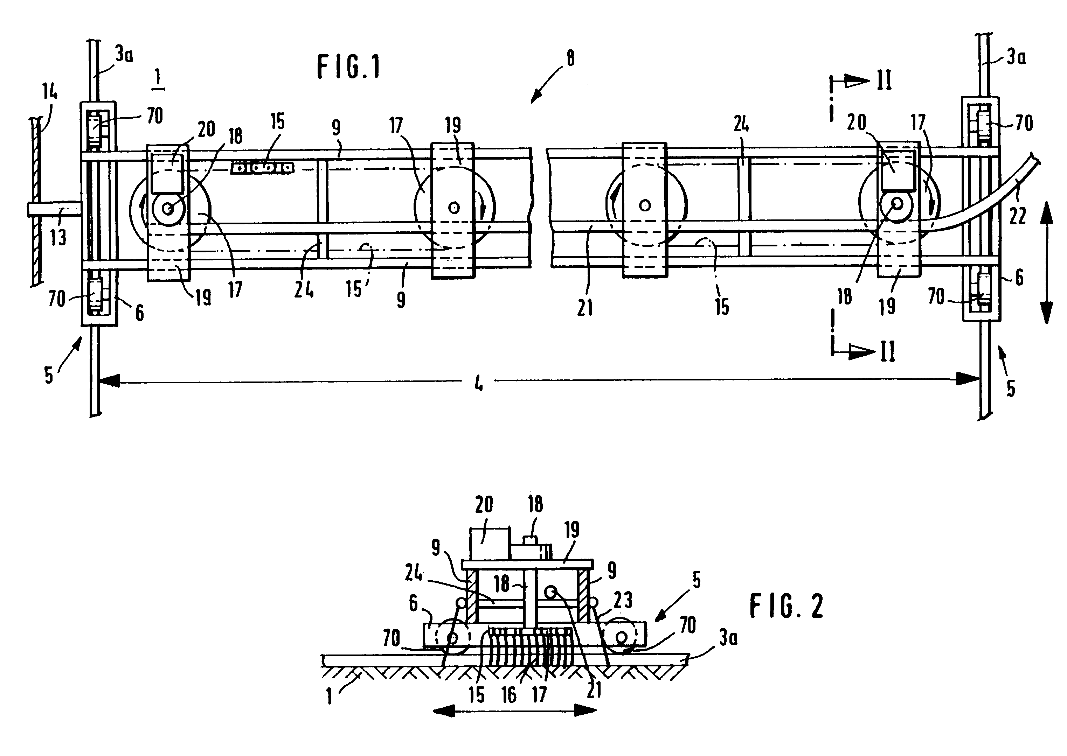

Die Fig. 1 und 2 zeigen ein erstes Ausführungsbeispiel der Erfindung in Drausicht und im Querschnitt entlang der Linie II/II in Fig. 1.

Auf der Bodenfläche 1 der Reitbahn sind die Fahrbahnen 3 für das Fahrgestell als Schienen3a ausgebildet und entlang der Längsseiten der Bodenfläche 1 verlegt. Auf diesen Schienen 3a ist ein insgesamt mit 8 bezeichnetes Fahrgestell gelagert, welches entlang des Dopppelpfeiles auf der rechten Seite der Fig. 1 auf den Schienen 3a hin und her verfahrbar ist.

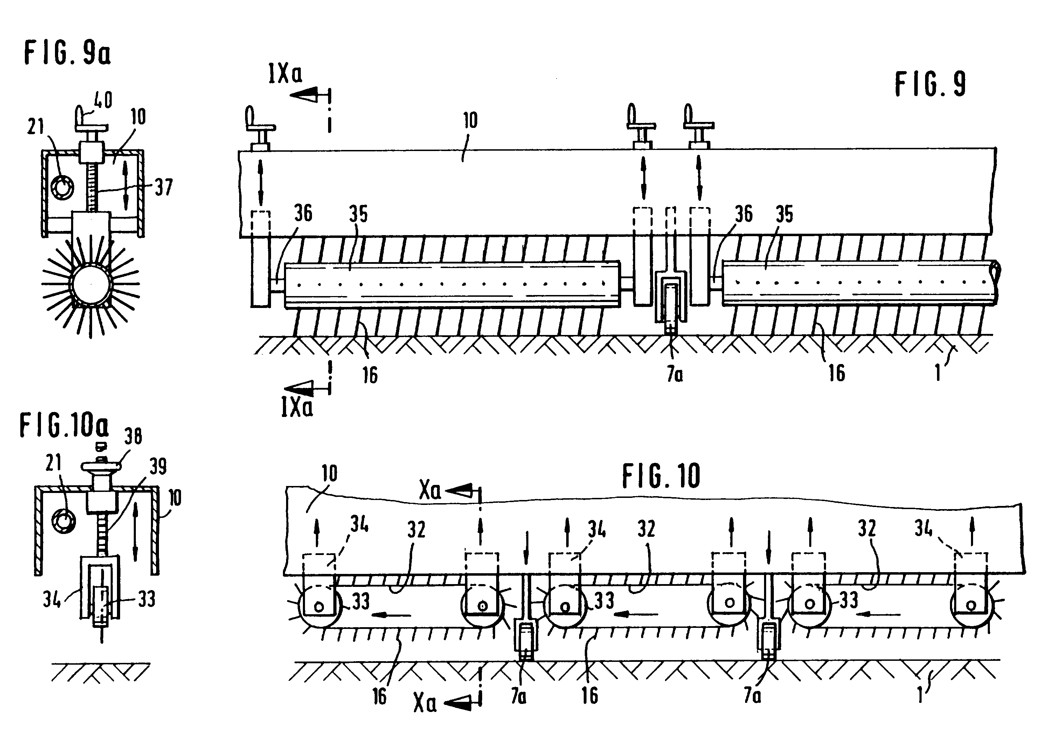

Im dargestellten Ausführungsbeispiel weist das Fahrgestell 8 als Stegblechträger 9 (Fig. 8) ausgebildete Querträger auf, die parallel zueinander und im Abstand angeordnet sind. Die Enden jedes Querträgers 9 sind fest mit den Fahrwerken 5 verbunden. Die Querträger 9 überspannen die Breite 4 der Bodenfläche, die normalerweise 20 m beträgt.

Aus diesem Grund müssen die Querträger 9, 9a, 10, 11 eine hohe Biegesteifigkeit aufweisen und zudem stabil an den Fahrwerken befestigt sein.

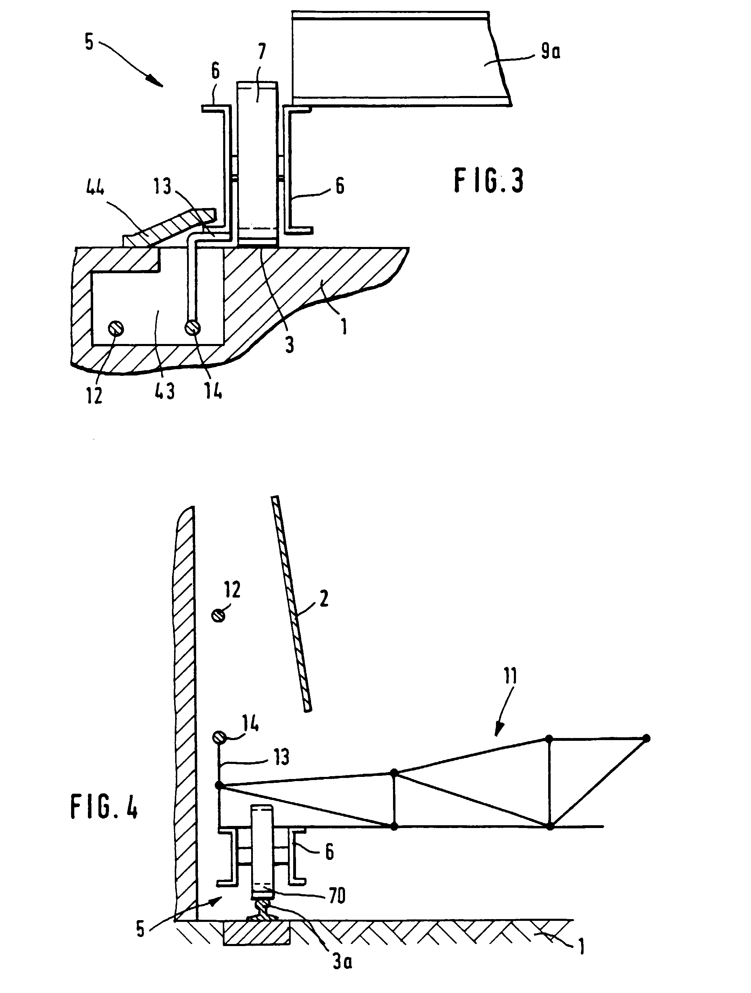

Jedes der Fahrwerke 5 besteht aus einem Rahmen 6, der - wie die Fig. 3 bis 5 erkennen lassen - aus U-förmigen Trägern aufgebaut sein kann.

Zwischen den vorderen und hinteren Bereichen eines Rahmens sind Räder 7, 70 angeordnet, die wie die Fig. 1, 2, 4 bis 7 erkennen lassen, auch als Schienenlaufräder 70 ausgebildet sein können.

Wie vor allem in Fig. 9 und 10 angedeutet ist, kann das Fahrgestell 8 auch durch Stützrollen 7a an einer oder mehreren Stellen der Querträger unterstützt werden.

Im Ausführungsbeispiel nach den Fig. 1 bis 4 erfolgt ein Antrieb des Fahrgestells 8 durch wenigstens einen Seilzuganordnung, die aus einem Leertrum 12 und einem Antriebstrum 14 besteht, an den ein Mitnehmer 13 angeschlossen ist, der an eine der beiden Fahrgestelle 5 befestigt ist. Die Seilzuganordnung kann gemäß Fig. 3 in einem Kanal 43 unterhalb der Bodenfläche 1, aber auch gemäß Fig. 4 unter einer Längsbande angeordnet sein. Gemäß Fig. 4 sind auch die Schienen 3a unterhalb dieser Längsbande 2 verlegt, so daß der Antrieb des Fahrgestells 8 und die Schienen 3a nicht störend in der Reitbahn angeordnet sind.

Fig. 3 zeigt, daß im Rahmen 6 des Fahrgestells 3 auch normale Laufräder 7 angeordnet sein können. Diese Laufräder 7 besitzen keine Führung durch Schienen 3a, wie dieses bei Schienenlaufrädern 70 der Fall ist. Beim Einsatz von normalen Laufrädern 7 empfiehlt es sich, jedes Fahrwerk 5 an eine Seilzuganordnung 12, 13, 14 anzuschließen, um ein Verkanten des Fahrgestells 8 bei seiner Bewegung zu verhindern. Die Laufräder 7 laufen auf einfachen Fahrbahnen 3.

Im Ausführungsbeispiel nach Fig. 3 verlaufen Leertrum 12 und Antriebstrum 14 der Seilzuganordnung nebeneinander im Kanal 43 und sind um nicht dargestellte Antriebs- und Umlenkräder an den Enden des Kanals 43 geführt. Dem gegenüber liegen der Leertum 12 und der Antriebstrum 14 nach Fig. 4 übereinander hinter der Bande 2. Entsprechend sind auch die nicht dargestellten Antriebs- und Umlenkräder angeordnet.

Die bauliche Ausbildung, vor allem einer Reithalle, läßt es in vielen Fällen nicht zu, daß entlang der Seitenkanten der Bodenfläche Seilzuganordnungen 12, 13, 14 installiert werden. Dieses kann vor allem dann der Fall sein, wenn in den Seitenwänden einer Reithalle Tore angeordnet sind.

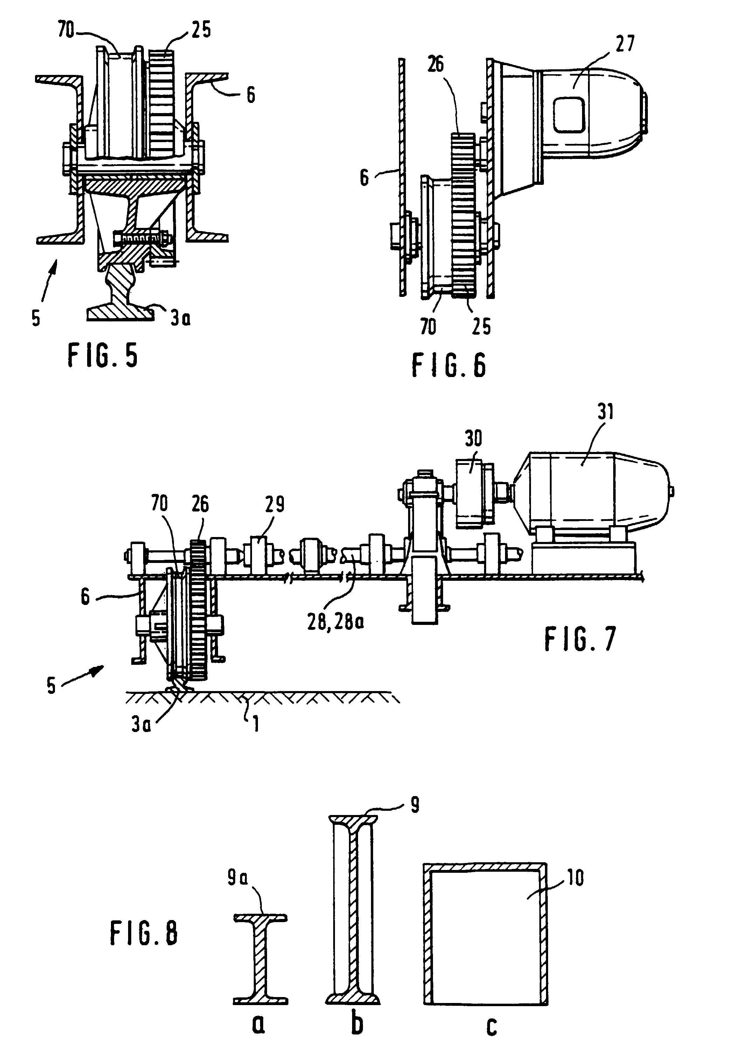

Um unter Umständen umfangreiche bauliche Veränderungen an oder in einer Reithalle zu vermeiden, kann das Fahrgestell 8 mit einem Eigenantrieb versehen werden. In einem ersten Ausführungsbeispiel kann eines der Fahrwerke 5 oder auch jedes Fahrwerk mit einem Zahnrad 25 kombiniert sein, welches in an sich bekannter Weise mit einem Laufrad 7 oder einem Schienenlaufrad 70 verschraubt ist. Ein solches Zahnrad 25 ist eine der Voraussetzungen dafür, daß ein Eigenantrieb des Fahrgestells 8 wirksam werden kann. Fig. 5 zeigt die Verbindung eines Schienenlaufrades 70 mit dem Zahnrad 25. Ohne am Kern der Erfindung etwas zu ändern, kann auch ein normales Laufrad 7 mit einem Zahnrad 25 verbunden sein.

Fig. 6 zeigt ein erstes Ausführungsbeispiel. An einer Seite des Fahrwerks 5, vorzugsweise an seiner Innenseite, ist ein Antriebsmotor 27 angeflanscht, der über ein Ritzel 26 auf das Zahnrad 25 einwirkt. Ein Antriebsmotor 27 kann an beiden Fahrwerken 5 des Fahrgestells 8 angeflanscht sein. Hierdurch wird ein nahezu idealer Gleichlauf beider Fahrwerke 5 gewährleistet.

Eine weitere Möglichkeit für einen Eigenantrieb des Fahrgestells 8 ist schematisch in Fig. 7 angedeutet. Das Zahnrad 25, das mit einem Rad 7, 70 verschraubt ist, steht über ein Ritzel 26 mit einer Welle 28 in Antriebsverbindung. Die Welle 28 ist in Wellenlagern 29 gelagert, die über die gesamte Breite des Fahrgestells 8, beispielsweise auf den Querträger 9, 9a, 10, 11, angeordnet sind. Über ein Getriebe und eine Kupplung 30 ist die Welle 28 an einen Zentral-Antriebsmotor 31 angeschlossen.

Wenn die Welle 28 mit beiden Fahrwerken 5 in Antriebsverbindung steht, ist auch durch diese Konstruktion ein Gleichlauf beider Fahrwerke sichergestellt.

Wenn jedoch nur eines der Fahrwerke 5 mit einem Antriebsmotor 27 gemäß Fig. 6 in Antriebsverbindung steht, kann eine Welle 28a vorgesehen werden, die eine Antriebsverbindung mit dem gegenüberliegenden Fahrwerk 5 herstellt. Durch eine solche Gleichlaufwelle 28a, die ebenfalls in Wellenlagern 29 auf dem Querträger 9, 9a, 10, 11 gelagert ist, wird ein Gleichlauf beider Fahrwerke 5 sichergestellt.

Wie die Fig. 1 und 2 erkennen lassen, gehören zu den Werkzeugen zur Aufbereitung des Bodens Ketten 15, an denen Federzinken 16 befestigt sind. Jede Kette 15 ist um Kettenräder 17 geführt, die auf Wellen 18 angeordnet sind. Die Wellen 18 sind in Trägern 19 gelagert. Auf jeweils einem der Träger 19 ist ein Getriebemotor 20 angeordnet, der, wie dieses vor allem in Fig. 2 erkennbar ist, über ein Untersetzungsgetriebe 18a die Welle 18 antreibt

Durch die Motore 20 werden die Ketten in Richtung der Pfeile angetrieben, so daß die Federzinken 16 an den in Fig. 1 dargestellten unteren Trums der Ketten 15 den Boden nach links, die Federzinken 16 an den oberen Trumsder Ketten 15 hingegen nach rechts durchstreifen. Hierdurch wird eine wirksame Bearbeitung der Bodenfläche 1 und auch eine Planierung des Bodens bewirkt.

Oberhalb der Ketten 15 ist ein Sprührohr 21 angeordnet, welches an einen Wasserschlauch 22 angeschlossen ist, der entlang einer der Längsbanden ausgelegt ist. Ventile bzw. Hähne zum Ein- und Ausschalten des Sprühwassers sind der Einfach halber nicht dargestellt.

Der Querschitt gemäß Fig. 2 läßt erkennen, daß im dargestellten Ausführungsbeispiel an beiden Querträgern 9 verschwenkbare Egalisierungselemente 23 angeordnet sind, die jeweils zur Bearbeitung des Bodens durch die Federzinken 16 eine Planierung der Oberfläche 1 vervollständigen. Die Egalisierungselemente 23 sind mit einem nicht dargestellten Verstellmechanismus kombiniert.

Das Sprührohr 21 ist auf Rohrträgern 24 befestigt, die quer zwischen den Querträgern 9 angeordnet sind.

Fig. 4 zeigt einen als Fachwerkträger 11 ausgebildeten Querträger, zu dem, entpsrechend der Fig. 1, ein weiterer Fachwerkträger 11 als Querträger parallel geführt sein kann. Zwischen den Querträgern 11 können dann die in Fig. 4 nicht dargestellten Blöcke aus den Ketten 15, den Kettenrädern 17 und den Antriebsmotoren 20 angeordnet sein.

Fig. 8 zeigt skizzenhaft die Querschnitte weiterer Querträger. Der Querträger 9a ist als Walzprofil ausgebildet. Der Querträger 10 ist ein Kastenträger. Die Erfindung läßt es zu, daß die beiden Fahrwerke 5 jeweils mit einem der Querträger 9 bzw. 9a oder 11 miteinander verbunden sind. Aus Stabilitätsgründen wird jedoch in vielen Ausführungsbeispielen bevorzugt, jeweils zwei parallele Querträger 9, 9a bzw. 11 einzusetzen.

Der Kastenträger 10 nach Fig. 8c hat den Vorteil, daß er eine große Stabilität aufweist und zudem in seinem Inneren den Kettenantrieb sowie die Ketten 15 aufnehmen kann.

Eine Höhenverstellbarkeit der Ketten 15 gegenüber der Bodenfläche 1 wird durch an sich bekannte Mittel erreicht, die zwischen den zu Blöcken zusammengefaßten ketten 15, Kettenrädern 17 bzw. Motorträgern bzw. Träger 19 und den Querträgern 9, 9a, 10 und 11 angeordnet sind. Die Höhenverstellbarkeit der Ketten 15 mit den Kettenrädern 17 und den Trägern 19 kann durch hand- oder motorbetriebene Spindelantriebe, aber auch durch Zahnstangenantriebe erfolgen, die von Hand betätigt werden.

Ohne am Kern der Erfindung etwas zu ändern, können zum Antrieb der Höhenverstellbarkeit auch pneumatische oder hydraulische Anordnungen eingesetzt werden.

Die Fig. 9 und 10 zeigen weitere Werkzeuge zum Bearbeiten und Planieren der Bodenfläche 1. Unterhalb der Querträger 9, 9a, 10 oder 11 können auf Wellen 36 Trommeln gelagert werden, deren Lager 34 höhenverstellbar unterhalb der Querträger 9, 9a, 10 bzw. 11 angeordnet sind. Die Fig. 9a zeigt einen Querschnitt durch die Fig. 9 entlang der Linie IXa/IXa. Hier ist schematisch angedeutet, daß die Wellen 36 der Trommeln 35 in Lagern 34 sitzen, die mit Hilfe einer durch eine Kurbel 40 bzw. durch ein Handrad 38 betätigte Spindel 37 aufwärts und abwärts verfahren werden können. Ein solcher Spindelantrieb 37, 38 bzw. 40 ist auch in der Fig. 9 angedeutet.

Üblicherweise sind unterhalb des Fahrgestells 8 vier Trommeln 35 auf die beschriebene Weise angeordnet. Der Antrieb der Trommeln kann durch nicht dargestellte Elektromotore über Kegelradantriebe oder Kettentriebe erfolgen.

Im Querschnitt der Fig. 9a ist angedeutet, daß als Querträger ein Kastenträger 10 eingesetzt ist.

Die Fig. 10 und 10a zeigen, daß unterhalb des Querträgers 9, 9a, 10 bzw. 11 auch um Kettenräder 33 laufende Ketten 32 eingesetzt werden können. Der Antrieb der Kettenräder 33 kann über nicht dargestellte Elektromotore erfolgen. Auch im Ausführungsbeispiel nach den Fig. 10, 10a kann das Heben und Senken der Ketten 32 durch zuvor erläuterte Spindelantriebe, aber auch über Zahnstangen erfolgen.

Zum Höhenverstellen der Werkzeuge kann, ohne am Kern der Erfindung etwas zu ändern, auch ein pneumatischer oder ein hydraulischer Antrieb zum Einsatz kommen.

Wenn die dargestellten Vorrichtungen bzw. Fahrgestelle mit einer nicht dargestellten vorderen und hinteren Verkleidung versehen werden, lassen sich die Fahrgestelle 8 auch als bewegliche Bande einsetzen, durch die die Reitbahn in Bereiche gewünschter Größe unterteilt werden kann.

### Liste der verwendeten Bezeichnungen

- 1: Bodenfläche
- 2: Bande
- 3: Fahrbahn
- 3a: Schiene
- 4: Breite der Bodenfläche
- 5: Fahrwerk
- 6: Rahmen
- 7: Laufrad
- 70: Schienenlaufrad
- 7a: Stützrolle
- 8: Fahrgestell
- 9: Querträger (Stegblechträger)
- 9a: Querträger (Walzprofil)
- 10: Querträger (Kastenträger)
- 11: Querträger (Fachwerkträger)
- 12: Leertrum
- 13: Mitnehmer
- 14: Antriebstrum
- 15: Kette
- 16: Federzinke
- 17: Kettenrad
- 18: Welle
- 19: Motorträger
- 20: Getriebemotor
- 21: Sprührohr
- 22: Wasserschlauch
- 23: Egalisierungselement
- 24: Rohrträger
- 25: Zahnrad
- 26: Ritzel
- 27: Antriebsmotor
- 28: Welle
- 28a: Gleichlaufwelle
- 29: Wellenlager
- 30: Kupplung
- 31: Zentralantriebsmotor
- 32: Kette
- 33: Kettenrad
- 34: Lager
- 35: Trommel
- 36: Welle
- 37: Spindel
- 38: Handrad
- 39: Zahnstange
- 40: Kurbel
- 41: hydraulischer bzw. pneumatischer Antrieb
- 42: fahrbare Bande
- 43: Kanal
- 44: Abdeckung des Kanals 43

## Patentansprüche

1. Vorrichtung zur Aufbereitung der Bodenfläche (1) einer Reitbahn in einer Reithalle oder auf einem offenen Reitplatz,
dadurch gekennzeichnet,
daß sie in der Höhe verstellbare Werkzeuge (15, 16; 28, 32, 35) zur Bearbeitung und Planierung der Bodenfläche (1) und ein die Breite (4) der Bodenfläche (1) überspannendes und in Längsrichtung über die Bodenfläche (1) hin- und herverfahrbares Fahrgestell (8) umfaßt, und daß die Werkzeuge (15, 16; 28, 32, 35) derart über die Breite (4) der Bodenfläche (1) verteilt an dem Fahrgestell (8) angeordnet sind, daß durch sie während der Bewegung des Fahrgestells (8) der Boden über die gesamte Breite der Bodenfläche (4) bearbeitbar ist, und daß ein ebenfalls über die Breite der Bodenfläche sich erstreckendes Sprührohr (21) einer am Fahrgestell (8) angebrachten Einrichtung (21, 22, 24) zum Befeuchten der Bodenfläche (4) aus geringer Höhe vorgesehen ist.

2. Vorrichtung nach Anspruch 1, dadurch gekennzeichnet, daß das Fahrgestell (8) aus zwei Fahrwerken (6) mit Rädern (7, 70) und Querverbindern (9, 9a, 10, 11) besteht, die die Fahrwerke (5) miteinander verbinden.

3. Vorrichtung nach Anspruch 2, dadurch gekennzeichnet, daß jedes Fahrwerk (5) aus einem Rahmen (6) und zwei Rädern (7, 70) besteht.

4. Vorrichtung nach den Ansprüchen 2 und 3, dadurch gekennzeichnet, daß die Räder Laufräder (7) sind.

5. Vorrichtung nach den Ansprüchen 2 und 3, dadurch gekennzeichnet, daß die Räder Schienenlaufräder (70) sind, die auf Schienen (3) neben den Längsseiten der Bodenfläche (1) laufen und von diesen geführt sind.

6. Vorrichtung nach den Ansprüchen 1 bis 5, gekennzeichnet durch wenigstens eine Stützrolle (7a) unterhalb der Querverbinder (9, 9a, 10, 11).

7. Vorrichtung nach den Ansprüchen 1 bis 6, dadurch gekennzeichnet, daß als Querverbinder wenigstens ein Walzprofilträger (9a) vorgesehen ist.

8. Vorrichtung nach den Ansprüchen 1 bis 6, dadurch gekennzeichnet, daß als Querverbinder wenigstens ein Stegblechträger (9) vorgesehen ist.

9. Vorrichtung nach den Ansprüchen 1 bis 6, dadurch gekennzeichnet, daß als Querverbinder ein Kastenträger (10) vorgesehen ist.

10. Vorrichtung nach den Ansprüchen 1 bis 6, dadurch gekennzeichnet, daß als Querverbinder wenigstens ein Fachwerkträger (11) vorgesehen ist.

11. Vorrichtung nach den Ansprüchen 1 bis 10, dadurch gekennzeichnet, daß das Fahrgestell (8) über wenigstens einen Mitnehmer 13 an den Antriebstrum (14) wenigstens einer Seilzuganordnung (12, 14) neben einer Längsseite der Bodenfläche (1) angeschlossen ist.

12. Vorrichtung nach Anspruch 14, dadurch gekennzeichnet, daß eine Seilzuganordnung ein endloses Seil mit einem Antriebstrum (14) und einem Leertrum (12) sowie an den Enden einer Längsseite der Bodenfläche (1) einerseits ein Antriebsrad sowie andererseits ein Umlenkrad einschließt.

13. Vorrichtung nach den Ansprüchen 11 und 12, dadurch gekennzeichnet, daß die Seilzuganordnung (12, 13, 14) unterhalb einer Längsbande (2) angeordnet ist.

14. Vorrichtung nach den Ansprüchen 11 und 12, dadurch gekennzeichnet, daß die Seilzuganordnung (12, 13, 14) in einem Kanal unterhalb der Bodenfläche (1) angeordnet ist.

15. Vorrichtung nach Anspruch 14, dadurch gekennzeichnet, daß der Kanal für die Seilzuganordnung (12, 13, 14) im Bereich eines Überganges zur Bodenfläche (1) mit einer Abdeckung überdeckt ist.

16. Vorrichtung nach den Ansprüchen 1 bis 9, dadurch gekennzeichnet, daß das Fahrgestell (8) mit einem Eigenantrieb (27, 31) kombiniert ist.

17. Vorrichtung nach Anspruch 16, dadurch gekennzeichnet, daß der Eigenantrieb wenigstens einen an ein Fahrwerk (5) angeflanschten Elektro-Antriebsmotor (27) einschließt, der über Zahnräder (25, 26) mit einem Rad (7, 70) des Fahrwerks (5) in Antriebsverbindung steht.

18. Vorrichtung nach einem der Ansprüche 11 bis 17, dadurch gekennzeichnet, daß beide Fahrwerke (5) des Fahrgestells (8) über eine Gleichlaufvorrichtung (25, 26, 28a) miteinander in Wirkverbindung stehen.

19. Vorrichtung nach den Ansprüchen 1 bis 8 und 17, dadurch gekennzeichnet, daß der Eigenantrieb einen Zentralantriebsmotor (31) sowie eine Kupplung (30), eine Welle (28) sowie Zahnräder (25, 26) in Verbindung mit einem Rad (7) wenigstens eines Fahrwerks (5) einschließt.

20. Vorrichtung nach den Ansprüchen 1 bis 19, dadurch gekennzeichnet, daß die Werkzeuge zur Bearbeitung und/oder Planierung der Bodenfläche (1) Zinken (16) sind, die während der Bewegung des Fahrgestells (8) durch die Bodenfläche (1) bewegbar sind.

21. Vorrichtung nach Anspruch 20, dadurch gekennzeichnet, daß die Zinken (16) an Ketten (15, 32) sitzen, die quer zur Fahrtrichtung des Fahrgestells (8) um Kettenräder (17, 33) umlaufen.

22. Vorrichtung nach den Ansprüchen 20 und 21, dadurch gekennzeichnet, daß die Kettenräder (33) auf parallel zu den Längsseiten der Bodenfläche (1) verlaufenden Wellen sitzen.

23. Vorrichtung nach den Ansprüchen 20 und 21, dadurch gekennzeichnet, daß die Kettenräder (17) auf vertikal zur Bodenfläche (1) verlaufenden Wellen (18) sitzen.

24. Vorrichtung nach einem oder mehreren der Ansprüche 20 bis 23, dadurch gekennzeichnet, daß im Fahrgestell (8) in Ausrichtung zu den Querträgern (9, 9a, 10, 11) mehrere Ketten (15, 32) mit Zinken (16) angeordnet sind.

25. Vorrichtung nach Anspruch 20, dadurch gekennzeichnet, daß die Zinken (16) am Mantel von Trommeln (35) sitzen, die je auf einer quer zur Fahrtrichtung verlaufenden Welle (36) befestigt sind, die drehbar im Fahrgestell (8) gelagert sind.

26. Vorrichtung nach den Ansprüchen 20 bis 25, dadurch gekennzeichnet, daß die Zinken (16) federnd an der Kette (15, 32) bzw. an der Trommel (35) befestigt sind.

27. Vorrichtung nach den Ansprüchen 20 bis 26, dadurch gekennzeichnet, daß die Ketten (15, 32) bzw. die Trommeln (35) höhenverstellbar im Fahrgestell (8) gelagert sind.

28. Vorrichtung nach Anspruch 27, dadurch gekennzeichnet, daß zum Höhenverstellen der Ketten (15, 32) bzw. der Trommeln (35) Spindelantriebe (37, 38) vorgesehen sind.

29. Vorrichtung nach Anspruch 27, dadurch gekennzeichnet, daß zum Höhenverstellen der Ketten (15, 32) bzw. der Trommeln (35) Zahnstangenantriebe (39, 40) vorgesehen sind.

30. Vorrichtung nach Anspruch 27, dadurch gekennzeichnet, daß zum Höhenverstellen der Ketten (15, 32) oder der Trommeln (35) hydraulische oder pneumatische Antriebe (41) vorgesehen sind.

31. Vorrichtung nach den Ansprüchen 20 bis 30, dadurch gekennzeichnet, daß der Antrieb der Ketten (15, 32) oder der Trommeln (35) durch Elektromotore (22) erfolgt.

32. Vorrichtung nach den Ansprüchen 1 bis 31, dadurch gekennzeichnet, daß das Sprührohr (21) an einen entlang einer Längsseite der Bodenfläche (1) ausgelegten Wasserschlauch (22) angeschlossen ist.

33. Vorrichtung nach den Ansprüchen 1 bis 32, dadurch gekennzeichnet, daß das Fahrgestell (8) nach Art einer Bande (42) beidseitig verkleidet ist.

34. Vorrichtung nach den Ansprüchen 1 bis 33, dadurch gekennzeichnet, daß wenigstens an einem der Querträger (9, 9a, 10, 11) ein verschwenkbares Egalisierungselement (23) angeordnet ist.

## Claims

1. Apparatus for preparing a ground area (1) of an arena in a riding hall or of an open riding course, characterized in that
vertically adjustable tools (15, 16; 28 32, 35) for preparing and levelling the ground area (1) and a chassis (8) spanning the width (4) of the ground area (1), movable to and fro in a longitudinal direction of the ground area (1) are comprised, and that
the tools (15, 16; 28, 32, 35) are mounted on the chassis (8) along the width (4) of the ground area (1) such that the complete width of the ground area (1) can be prepared by them during movement of the chassis (8) and that
a spraying pipe (21) of means (21, 22, 24) for wetting the ground area (1) from a low height is mounted on the chassis (8) also extending along the width of the ground area.

2. Apparatus according to claim 1, characterized in that the chassis (8) consists of two running gears (5) with wheels (7, 70) and cross-connectors (9, 9a, 10, 11) which connect the running gears (5) with each other.

3. Apparatus according to claim 2, characterized in that each running gear (5) includes a frame (6) and two wheels (7, 70).

4. Apparatus according to claims 2 and 3, characterized in that the wheels are running wheels (7).

5. Apparatus according to claims 2 and 3, characterized in that the wheels are formed as rail running wheels (70) which run on rails (3) adjacent to longitudinal sides of the ground area (1) and are guided by these rails.

6. Apparatus according to claim 1 to 5, characterized in that at least one support roller (7a) is arranged beneath the cross-connectors (9, 9a, 10, 11).

7. Apparatus according to claim 1 to 6, characterized in that a rolled profile support (9a) is used as a cross-connector.

8. Apparatus according to claims 1 to 6, characterized in that a web plate support (9) is used as a cross-connector.

9. Apparatus according to claims 1 to 6, characterized in that a box girder (10) is used as a cross-connector.

10. Apparatus according to claims 1 to 6, characterized in that at least one lattice girder (11) is used as a cross-connector.

11. Apparatus according to claims 1 to 10, characterized in that the chassis (8) is connected with a driving strand (14) of at least one tow arrangement (12, 14) which is located adjacent to a longitudinal side of the ground area, by at least one driver (13).

12. Apparatus according to claim 11, characterized in that the tow arrangement includes an endless cable (rope) having a driving strand (14) and a return strand (12), and a driving wheel and a deflection wheel located at the ends of a longitudinal side of the ground area, respectively.

13. Apparatus according to claims 11 and 12, characterized in that the tow arrangement (12, 13, 14) is arranged beneath a band (2).

14. Apparatus according to claims 11 and 12, characterized in that the tow arrangement (12, 13, 14) is located in a channel provided beneath the ground area (1).

15. Apparatus according to claim 14, characterized in that in a region of a cross-over to the ground area (1) the channel for the tow arrangement (12, 13, 14) is covered with a cover.

16. Apparatus according to claims 1 to 9, characterized in that the chassis (8) is combined with a self-contained drive (27, 31).

17. Apparatus according to claim 16, characterized in that the self-contained drive includes at least one electric drive motor (27) flange-mounted on the running gear (5) and drivingly connected with one wheel (7, 70) of the running gear (5) by a toothed wheel (25).

18. Apparatus according to claims 11 to 17, characterized in that both running gears (5) of the chassis (8) are operationally connected with each other by en equalizing device (25, 26, 28a).

19. Apparatus according to claims 1 to 8 and 17, characterized in that the self-contained drive includes a central drive motor (31), a coupling (30), a shaft (28), toothed wheels (25, 26) connected with a wheel (7) of at least one running gear (5).

20. Apparatus according to claims 1 to 19, characterized in that the tools for preparing and/or levelling of the ground area (1) are formed as tines (16) movable through the ground area (1) during movement of the chassis (8).

21. Apparatus according to claim 20, characterized in that the tines (16) are mounted on chains (15, 32) which run about sprocket wheels (17, 33) transverse to the movement direction of the chassis (8).

22. Apparatus according to claims 20 and 21, characterized in that the sprocket gears (33) are mounted on shafts extending parallel to longitudinal sides of the ground area (1).

23. Apparatus according to claims 20 and 21, characterized in that the sprocket gears (17) are mounted on shafts (18) extending vertically to the ground area (1).

24. Apparatus according to one or more of claims 20 to 23, characterized in that a plurality of the chains (15, 32) with the tines (16) are arranged on the chassis (8) in an alignment relationship to the cross-beams (9, 9a, 10, 11).

25. Apparatus according to claim 20, characterized in that the tines (16) are arranged on the outer surface of drums (35) each of which being mounted on a shaft (36) extending transverse to the movement direction, which are supported pivotably in the chassis (8).

26. Apparatus according to claims 20 to 25, characterized in that the tines (16) are resiliently supported on the chain (15, 32) or the drum (35).

27. Apparatus according to claims 20 to 26, characterized in that the chains (15, 32) or the drums (35) are mounted in the chassis ( 8) adjustably in height.

28. Apparatus according to claim 27, characterized in that spindle drives (37, 38) are provided for height adjustment of the chains (15, 32) or the drums (35).

29. Apparatus according to claim 27, characterized in that rack-and-pinion drives (39, 40) are provided for height adjustment of the chains (15, 32) or the drums (35).

30. Apparatus according to claim 27, characterized in that hydraulic or pneumatic drives (14) are provided for height adjustment of the chains (15, 32) or the drums (35).

31. Apparatus according to claims 20 to 30, characterized in that the driving of chains (15, 32) or the drums (35) is effected by electromotors (22).

32. Apparatus according to claims 1 to 31, characterized in that the spraying pipe (21) is connected to a water hose (22) which is located adjacent to a longitudinal side of the ground area (1).

33. Apparatus according to claims 1 to 32, characterized in that the chassis (8) can be put in as bands (42) on both sides.

34. Apparatus according to claims 1 to 33, characterized in that a pivotal levelling element (23) is provided on at least one of the cross-beams (9, 9a, 10, 11).

## Revendications

1. Dispositif pour préparer le sol (1) d'un manège dans une salle de manège ou bien sur un manège ouvert,
caractérisé en ce qu'il comprend des outils (15, 16 ; 28, 32, 35), réglables en hauteur, pour le traitement et l'aplanissement du sol (1), et un châssis susceptible d'être déplacé en va-et-vient au-dessus du sol (1) en direction longitudinale, et s'étendant sur la largeur (4) du sol (1), en ce que les outils (15, 16 ; 28, 32, 35) sont agencés sur le châssis (8) de manière répartie sur la largeur (4) du sol (1) de telle manière qu'il est possible de préparer le sol sur la totalité de la largeur (4) de celui-ci au moyen de ces outils pendant le déplacement du châssis (8), et en ce qu'il est prévu un tube de pulvérisation (21), qui s'étend également sur la largeur du sol, d'un système (21, 22, 24) monté sur le châssis pour humecter la surface (4) du sol depuis une faible hauteur.

2. Dispositif selon la revendication 1, caractérisé en ce que le châssis (8) est constitué de deux trains de roulement (5) avec des roues (7, 70) et des traverses (9, 9a, 10, 11) qui relient les trains de roulement (5) l'un à l'autre.

3. Dispositif selon la revendication 2, caractérisé en ce que chaque train de roulement (5) est composé d'un cadre (6) et de deux roues (7, 70).

4. Dispositif selon les revendications 2 et 3, caractérisé en ce que les roues sont des roues de déplacement (7).

5. Dispositif selon les revendications 2 et 3, caractérisé en ce que les roues sont des roues à déplacement sur rail (70), qui se déplacent sur des rails (5) à côté des grands côtés du sol (1) et sont guidées par ces rails.

6. Dispositif selon les revendications 1 à 5, caractérisé par au moins un galet de soutien (7a) au-dessous des traverses (9, 9a, 10, 11).

7. Dispositif selon les revendications 1 à 6, caractérisé en ce que l'on prévoit à titre de traverse au moins un élément porteur à profilé laminé (9a).

8. Dispositif selon les revendications 1 à 6, caractérisé en ce que l'on prévoit à titre de traverse au moins un élément porteur en tôle à rebords (9).

9. Dispositif selon les revendications 1 à 6, caractérisé en ce que l'on prévoit à titre de traverse un élément porteur en caisson (10).

10. Dispositif selon les revendications 1 à 6, caractérisé en ce que l'on prévoit à titre de traverse au moins un élément porteur à croisillon.

11. Dispositif selon les revendications 1 à 10, caractérisé en ce que le châssis (8) est relié par au moins un élément d'entraînement (13) au brin d'entraînement (14) d'au moins un agencement de traction à câble (12, 14) à côté d'un grand côté du sol (1).

12. Dispositif selon la revendication 14, caractérisé en ce qu'un agencement de traction à câble comprend un câble sans fin avec un brin d'entraînement (14) et un brin lâche (12), qui enferme aux extrémités d'un grand côté de la surface du sol (1) une poulie d'entraînement d'une part et une poulie de renvoi d'autre part.

13. Dispositif selon les revendications 11 et 12, caractérisé en ce que l'agencement de traction à câble (12, 13, 14) est agencé au-dessous d'une bande longitudinale (2).

14. Dispositif selon les revendications 11 et 12, caractérisé en ce que l'agencement de traction à câble (12, 13, 14) est agencé dans un canal au-dessous du sol (1).

15. Dispositif selon la revendication 14, caractérisé en ce que le canal pour l'agencement de traction à câble (12, 13, 14) est recouvert par une couverture dans la région d'une transition vers le sol (1).

16. Dispositif selon les revendications 1 à 9, caractérisé en ce que le châssis (8) est combiné avec un entraînement propre (27, 31).

17. Dispositif selon la revendication 16, caractérisé en ce que l'entraînement propre inclut au moins un moteur d'entraînement électrique (27) bridé sur le train de roulement (5) et en liaison d'entraînement avec une roue (7, 70) du train de roulement (5) par l'intermédiaire d'engrenages (25, 26).

18. Dispositif selon l'une des revendications 11 à 17, caractérisé en ce que les deux trains de roulement (5) du châssis (8) sont en liaison active l'un avec l'autre au moyen d'un dispositif homocinétique (25, 26, 28a).

19. Dispositif selon l'une des revendications 1 à 8 et 17, caractérisé en ce que l'entraînement propre inclut un moteur d'entraînement central (31) ainsi qu'un embrayage (30), un arbre (28) ainsi que des engrenages (25, 26), en relation avec une roue (7) d'au moins un train de roulement (5).

20. Dispositif selon les revendications 1 à 19, caractérisé en ce que les outils pour le traitement et/ou l'aplanissement de la surface du sol (1) sont des dents (16), susceptibles d'être déplacées à travers le sol (1) pendant le déplacement du châssis (8).

21. Dispositif selon la revendication 20, caractérisé en ce que les dents (16) sont montées sur des chaînes (15, 32) qui circulent autour de poulies à chaîne (17, 33) perpendiculairement à la direction de déplacement du châssis (8).

22. Dispositif selon les revendications 20 et 21, caractérisé en ce que les poulies à chaîne (33) sont montées sur des arbres qui s'étendent parallèlement aux grands côtés du sol (1).

23. Dispositif selon les revendications 20 et 21, caractérisé en ce que les poulies à chaîne (17) sont montées sur des arbres (18) qui s'étendent verticalement par rapport au sol (1).

24. Dispositif selon l'une ou plusieurs des revendications 20 à 23, caractérisé en ce qu'il est prévu plusieurs chaînes (15, 32) avec des dents (16), agencées dans le châssis (8) dans l'alignement des traverses (9, 9a, 10, 11).

25. Dispositif selon la revendication 20, caractérisé en ce que les dents (16) sont montées sur l'enveloppe de tambours (35) qui sont chacun fixés sur un arbre (36) perpendiculaire à la direction de déplacement, et montés avec faculté de rotation dans le châssis (8).

26. Dispositif selon les revendications 20 à 25, caractérisé en ce que les dents (16) sont fixées de manière élastique sur les chaînes (15, 32), ou sur les tambours (35).

27. Dispositif selon les revendications 20 à 26, caractérisé en ce que les chaînes (15, 32), ou les tambours (35), sont montées avec faculté de réglage en hauteur dans le châssis (8).

28. Dispositif selon la revendication 27, caractérisé en ce que, pour le réglage en hauteur des chaînes (15, 32), ou respectivement des tambours (35), il est prévu des entraînements à broche (37, 38).

29. Dispositif selon la revendication 27, caractérisé en ce que, pour le réglage en hauteur des chaînes (15, 32), ou respectivement des tambours (35), il est prévu des moyens d'entraînement à crémaillère (39, 40).

30. Dispositif selon la revendication 27, caractérisé en ce que, pour le réglage en hauteur des chaînes (15, 32), ou respectivement des tambours (35), il est prévu des moyens d'entraînement hydrauliques ou pneumatiques (41).

31. Dispositif selon les revendications 20 à 30, caractérisé en ce que l'entraînement des chaînes (15, 32), ou des tambours (35), a lieu au moyen de moteurs électriques (22).

32. Dispositif selon les revendications 1 à 31, caractérisé en ce que le tube de pulvérisation (21) est raccordé à un tuyau à eau (22) posé le long d'un grand côté du sol (1).

33. Dispositif selon les revendications 1 à 32, caractérisé en ce que le châssis (8) est habillé des deux côtés à la manière d'une bande (42).

34. Dispositif selon les revendications 1 à 33, caractérisé en ce qu'il est prévu un élément d'égalisation capable de basculer (23) agencé sur l'un au moins des supports transversaux (9, 9a, 10, 11).
